# EUROPÄISCHE PATENTSCHRIFT

(11) **EP 0 888 076 B1**
(45) Veröffentlichungstag und Bekanntmachung des Hinweises auf die Patenterteilung: **22.09.1999**
(21) Anmeldenummer: 97906179.3
(22) Anmeldetag: 06.03.1997
(51) Int. Cl.: A47J 37/10, A47J 36/06

(54) **TELLERFÖRMIGER DECKEL FÜR KOCHGESCHIRR, GARGEFÄSSE O. DGL.**
PLATE-SHAPED COVER FOR COOKING VESSELS OR THE LIKE
COUVERCLE EN FORME D'ASSIETTE POUR RECIPIENTS DE CUISSON OU ANALOGUES

(30) Priorität: 22.03.1996 DE 19611310
(43) Veröffentlichungstag der Anmeldung: 07.01.1999
(73) Patentinhaber: Repac, Petra, 65611 Brechen (DE); Culig, Branko, 68332 Gradac (SI)
(72) Erfinder: Culig, Branko, 68332 Gradac (SI); Repac, Cedomir, D-65611 Brechen (DE)
(74) Vertreter: Müller, Eckhard, Dr.
(86) Internationale Anmeldenummer: EP9701131
(87) Internationale Veröffentlichungsnummer: WO9735504

(56) Entgegenhaltungen:
- EP-A- 0 275 547
- WO-A-93/25134
- DE-A- 3 311 247
- DE-U- 9 316 720
- DE-U- 29 603 188
- DE-U- 29 605 334
- GB-A- J2 689
- GB-A- 625 312
- US-A- 2 428 894
- US-A- 2 536 246

## Beschreibung

Die Erfindung betrifft einen tellerförmigen Deckel für Kochgeschirr, Gargefäße o. dgl., wie Kochtopf oder Bratpfanne, der in einem zentralen Mittelbereich wenigstens eine Durchbrechung aufweist, wobei, vorzugsweise auf der Oberseite des Deckels,> ein die wenigstens eine Durchbrechung dachartig übergreifendes Abdeckelement mittels einer Halterung gehaltert ist.

Aus der DE-A-33 11 247 ist bereits ein derartiger Deckel bekannt, wobei dieser Deckel ein Abdeckelement aufweist, welches einen vollständigen oder auch teilweisen Verschluß der Durchbrechung zuläßt. Das Abdeckelement ist wahlweise als Aufsatz- oder Steckelement verwendbar und besitzt einen knopfförmigen Griff. Durch die spezielle Anordnung von Randnocken an dem Abdeckelement und Vorsprüngen an dem Rand der Durchbrechung besteht die Möglichkeit, das Abdeckelement entweder mit den Randnocken auf die Vorsprünge abzusetzen, so daß eine Belüftung des Gargeschirrs während des Garvorganges möglich ist. Andererseits kann das Abdeckelement auch in einer um etwa 45° gegenüber der ersten Stellung gedrehten Stellung vollständig in die Durchbrechung eingesetzt werden, so daß eine Belüftung des Gargefäßes nicht stattfindet. Mit diesem bekannten Abdeckelement kann die Durchbrechung somit entweder vollständig oder teilweise verschlossen werden. Dadurch, daß sich die Durchbrechung in einem bzgl. der Deckeloberfläche eingesenkten Deckelabschnitt befindet, kann von dem Abdeckelement herabtropfendes Fett bzw. können herabtropfende Wrasen daher zurück in das Gargefäß eintreten. Fett bzw. Wrasen können daher nicht auf die äußere Oberfläche des Deckels tropfen und somit nicht zum Deckelrand abfließen. Eine Verschmutzung der Oberfläche des Deckels durch aus dem Gargefäß austretende Fettspritzer o. dgl. ist somit bereits weitestgehend vermieden. Allerdings ist dieser bekannte Deckel aufgrund der recht aufwendigen Formgebung einerseits relativ aufwendig herstellbar und andererseits recht schwer zu reinigen. Darüber hinaus besteht durch die Anbringung von Randnocken an dem Abdeckelement auch eine gewisse Verletsungsgefahr bei der Handhabung des Abdeckelements sowie bei dessen Reinigung.

Weiterhin ist aus der EP-A-0 275 547 bereits ein Deckel für Kochtöpfe mit einem einzelnen Deckelstück bekannt, welches in einer Mittelzone mehrere Löcher aufweist. Dieser Deckel ist mit einem Abschirmstück ausgestattet, das von den Löchern nach oben beabstandet ist, so daß ein freies Entweichen von Gas ermöglicht, ein Austreten von Flüssigkeiten, wie Fettspritzern o. dgl. aus dem Deckel jedoch weitestgehend vermieden ist. Dieses Deckelstück ist von tellerartiger Gestalt, wobei die Mittelzone des Deckelstücks bezogen auf eine Gebrauchsstellung niedriger als der Rest des Deckels ist und wobei an dem Deckel wenigstens ein Standelement vorgesehen ist, welches das Abschirmstück trägt. Auch dieser bekannte Deckel ist hinsichtlich der Herstellung sehr aufwendig und darüber hinaus erst nach einer komplizierten Demontage des Abschirmelementes sowie der Halterung zu reinigen. Zu dieser Demontage müssen Schraubverbindungen gelöst werden, wobei nach dem Abnehmen des Abschirmelementes unter Umständen scharfkantige Teile eine Verletzungsgefahr bei der Reinigung des Deckels bedingen. Schließlich ist unmittelbar oberhalb des Abschirmelements ein Knauf angeordnet, welcher als Griffteil für den Deckel dient. Zum einen besteht hier die Gefahr, daß die Verschraubung dieses Knaufes sich während der Handhabung des Deckels ungewollt löst, zum anderen läßt sich der Knauf durch den Benutzer praktisch nur in der Weise ergreifen, daß die Hand des Benutzers durch die Austrittsbereiche des heißen Dampfes geführt wird.

Aus der DE-U-83 34 849 ist ein Deckelknopf mit steuerbarem Dampfauslaß bekannt, wobei der Deckelknopf ein Griffteil aufweist, welches mittels eines Befestigungselementes mit einem Sperrorgan verbunden ist. Zwischen dem Griffteil und dem Deckel ist eine Rosette angeordnet. Im Griffteil ist weiterhin eine Aufnahme für das Befestigungselement ausgebildet. Das Sperrorgan ist mit einer Dicht- und Auflagefläche versehen, auf der das Griffteil ruht, wobei Griffteil und Sperrvorgang zueinander drehfest angeordnet sind. Das Sperrorgan ist mit einem oder mehreren radial angeordneten Kanälen versehen, die über Öffnungen des Befestigungselementes in Verbindung stehen. Weiterhin ist das Sperrorgan in einer dieses eng umschließenden Ausnehmung der Rosette angeordnet, die auf ihrem Umfang mit die Kanäle freigebenden und verschließenden Elementen versehen. Das Freigeben bzw. Verschließen ist durch ein Verdrehen der Rosette einstellbar. Auch diese Ausbildung eines Deckelknopfes mit steuerbarem Dampfauslaß ist technisch nur aufwendig herstellbar und äußerst schwer zu reinigen. Zwar soll durch die spezielle Anordnung der Kanäle der aus dem Gargefäß austretende Dampf in etwa zur Deckeloberfläche abgeleitet werden, jedoch sind insbesondere bei Unachtsamkeiten des Benutzers Verbrennungen, bspw. der Hand des Benutzers, nicht ohne weiteres auszuschließen.

Schließlich ist aus der DE-U-89 04 779 ein Bratpfannendeckel bekannt, der aus Metall besteht und eine zentrische, kreisrunde Öffnung besitzt, welche dem Abzug von Wasserdampf dienen soll. Oberhalb dieser Öffnung ist ein nach innen und zum Mittelpunkt der Öffnung gewölbtes Abschirmelement angeordnet, welches am Rand um ein gewisses Maß über die Öffnung hinaus reicht. Das Abschirmelement ist mit einigen schmalen Abstützungen an dem Deckel befestigt. Der Vorteil dieses Bratpfannendeckels soll darin bestehen, daß eine Verschmutzung des Herdes bzw. Deckels durch das Umherspritzen von Öl, Fett o. dgl. während des Bratvorganges weitestgehend vermieden wird, da an das Abschirmelement gelangende Öl-, Fettspritzer o. dgl. aufgrund der Wölbung des Abschirmelements an seiner Unterseite zur Mitte des Abschirmelements zurückfließen und von dort durch die Öffnung zurück in die Bratpfanne tropfen. Abgesehen davon, daß dieser bekannte Bratpfannendeckel nicht sämtliche durch die Öffnung durchtretenden Fettspritzer zurückhalten kann, ist auch eine Reinigung des Deckels äußerst umständlich und langwierig. Insbesondere die Unterseite des Abschirm- oder Abdeckelements ist nur schwer zu erreichen, wobei auch aufgrund der Anbringung der schmalen Stege zwischen dem Abschirmelement und dem Deckel eine gewisse Verletzungsgefahr, insbesondere bei der Reinigung des Deckels nicht auszuschließen ist.

Demgegenüber liegt der Erfindung die Aufgabe zugrunde, einen Deckel mit verbesserter Handhabung zu schaffen. Insbesondere soll der Deckel während der Benutzung des Kochgeschirrs einfach und sicher von dem Kochgeschirr abnehmbar bzw. auf diesen aufsetzbar sein. Nach der Benutzung des Deckels soll nach einem nebengeordneten Aspekt der Erfindung ggf. eine leichte und ungefährliche Reinigung des Deckels ermöglicht werden.

Diese Aufgabe wird bei einem Deckel der eingangs genannten Art nach der Erfindung dadurch gelöst, daß die Halterung als den Deckel bügelartig überspannendes Griffteil ausgebildet ist und die endseitigen Abschnitte des Griffteils an dem Deckelrand befestigt sind. Dadurch, daß die Halterung den Deckel insgesamt i. w. diametral überspannt, kann der Benutzer den Deckel zum Zwecke des Abnehmens oder Aufsetzens auch in solchen Bereichen ergreifen, in denen mit einem Austreten von heißen Wasserdampf o. dgl. nicht zu rechnen ist. Eine mögliche Gefahr der Verbrennung ist somit weitestgehend reduziert.

Weiterhin besteht nach einer ersten vorteilhaften Weiterbildung der Erfindung ohne weiteres die Möglichkeit, das als Halterung ausgebildete Griffteil von dem Deckel zum Zwecke der Reinigung zu lösen, so daß eine einfache und schnelle Reinigung des Deckels wie auch des Abdeckelements gewährleistet ist.

Auch weist der erfindungsgemäße Deckel keine scharfkantigen Teile o. dgl. auf, so daß eine Verletzungsgefahr während des Reinigungsvorganges praktisch ausgeschlossen ist.

Nach einer anderen vorteilhaften Ausgestaltung der Erfindung ist der Deckelrand durch eine nach oben gebogene Ringwand gebildet, wobei die Ringwand radial nach außen weisende Nasen, Laschen, Nocken o. dgl. besitzt. Die an der Deckelperipherie umlaufende Ringwand verhindert sicher ein Abfließen von Fett, Wrasen, öl o. dgl., welches durch die Durchbrechung des Deckels nach außen getreten ist. Darüber hinaus bietet diese Ringwand die Voraussetzung dafür, daß das Griffteil einfach und sicher auf dem Deckelrand aufsetzbar ist. Die radial nach außen weisenden Nasen an dem Deckelrand dienen der einfachen Befestigung des Griffteils an dem Deckel.

Zum einfachen Aufsetzen des vom Deckel gelösten Griffteils und späteren Befestigen weisen die endseitigen Abschnitte des Griffteils nach einer weiteren vorteilhaften Weiterbildung der Erfindung an der Unterseite eine nut- oder rinnenartige Aufnahme für die Ringwand auf.

Zur Halterung des Griffteils an dem Deckel sind die endseitigen Abschnitte des Griffteils an der Unterseite mit einer i. w. U-förmigen, hakenförmigen o. dgl. geformten, nach innen weisenden Umbiegung versehen, mit welcher Umbiegung die Nase der Ringwand hintergreifbar bzw. umgreifbar ist.

Zur definierten Positionierung des Griffteils an dem Deckel in der Befestigungsposition ist die Umbiegung an einem ersten Seitenrand des Griffteils mit einem Anschlag, insbesondere einer Querwand o. dgl. versehen. Die endseitigen Abschnitte des Griffteils weisen somit taschenförmig geformte Aufnahmen auf, die in der Befestigungsstellung die Nasen des Deckels umgreifen. Zur Herstellung dieser Verbindung wird das Griffteil auf den Deckel aufgesetzt, wobei die Nut- oder rinnenartigen Aufnahmen der endseitigen Abschnitte des Griffteils seitlich der Nasen auf der nach oben gebogenen Ringwand des Deckels aufsitzen. Durch eine anschließende kleine Verdrehung des gesamten Griffteils auf dem Deckel werden die Nasen in die taschenförmigen Aufnahme in den Endabschnitten des Griffteils eingeführt, wodurch eine formschlüssige Verbindung zwischen dem Griffteil und dem Deckel herbeigeführt ist.

Um ein Lösen des Griffteils vom Deckel während der Benutzung sicher zu vermeiden, ist an wenigstens einem der endseitigen Abschnitte des Griffteils ein Verriegelungselement ein Schieber o. dgl. schwenkbar, kippbar o. dgl. gelagert, mit dem das Griffteil am Deckel gegen ein versehentliches Lösen sicherbar ist.

Von Vorteil ist das Verriegelungselement hierzu im Bereich eines zweiten Seitenrandes des Griffteils angeordnet und besitzt einen Anschlag, insbesondere eine Zunge, Nase, Lasche o. dgl., die in der Verriegelungsstellung seitlich der Nase des Deckels anliegt. Durch diese Maßnahmen wird die zunächst einseitig offene Tasche zur Aufnahme der Nase des Deckels bei dem in Verriegelungsstellung befindlichen Verriegelungselement geschlossen, so daß ein versehentliches Lösen des Griffteils vom Deckel ausgeschlossen ist.

Gemäß einem anderen vorteilhaften Merkmal der Erfindung ist das Verriegelungselement insbesondere mit einem Bolzen o. dgl., der insbesondere quer zur Längserstreckung des Griffteils angeordnet ist, im Bereich des endseitigen Abschnitts des Griffteils schwenkbar, kippbar o. dgl. gelagert. Diese Maßnahme zeichnet sich durch einen konstruktiv äußerst einfachen und damit auch kostengünstigen Aufbau aus.

Als besonders vorteilhaft erweist sich die Maßnahme, daß das Verriegelungselement in der Schließstellung von einer entsprechend angepaßten Ausnehmung des endseitigen Abschnitts i. w. vollständig aufgenommen ist. Hierdurch werden scharfkantige Ecken, Kanten o. dgl. vermieden, da das in der Verriegelungsstellung befindliche Verriegelungselement praktisch vollständig in die Endabschnitte des Griffs eingelassen bzw. von den dort vorgesehenen Ausnehmungen aufgenommen ist.

Um ein unbeabsichtigtes Lösen des Verriegelungselements in der Schließstellung zu vermeiden, ist dieses mittels einer Rastnase, Rastzapfens o. dgl. elastischen Element mit dem Endabschnitt des Griffteils verrastbar.

Gemäß einer anderen vorteilhaften Weiterbildung der Erfindung ist die Oberseite des Deckels i. w. konkav gewölbt ausgebildet. Somit ist die Möglichkeit gegeben, daß aus der Durchbrechung austretende Fett-, Ölspritzer oder Wrasen entlang der konkav gewölbten Oberfläche durch die Durchbrechung zurück in das Gargefäß eintreten bzw. fließen können.

Nach einer anderen besonders vorteilhaften Weiterbildung der Erfindung besteht der Deckel aus Glas, Keramik, Kunststoff und/oder Metall o. dgl., wobei die Unterseite des Deckels ggf. durch Sandstrahlen, Bedrucken, Anbringung von Noppen oder eines der Dekors aufgerauht ist. Diese Maßnahme läßt zum einen eine Beobachtung des Gargutes in dem Kochgeschirr, Gargefäß o. dgl. trotz aufliegenden Deckels zu. Zum anderen sorgt eine Aufrauhung der Unterseite des Deckels für eine verbesserte Rutschfestigkeit, wenn der Deckel auf dem Gargefäß aufgelegt ist. Ein versehentliches Abrutschen des Deckels vom Kochgeschirr ist dann nicht zu befürchten.

Nach einer weiteren vorteilhaften Weiterbildung der Erfindung weist das Griffteil ein Mittelteil zur Anbringung oder Halterung des Abdeckelements auf, von welchem Mittelteil sich zwei, ggf. auch drei oder mehr Arme zum Deckelrand erstrecken. Hierdurch wird ein besonders stabiles Griffteil geschaffen, welches sich einfach und sicher an dem Deckel festlegen läßt.

Im unaufwendigsten Fall weisen die Arme des Griffteils diametral nach außen, so daß das Griffteil den Deckel längs eines Durchmessers bügelförmig bzw. brückenartig überspannt. Zur Erhöhung der Stabilität insbesondere bei großen Deckeln kann es jedoch auch angezeigt sein, drei, vier oder mehr Arme für das Griffteil vorzusehen, die im Bereich des Mittelteils zusammenlaufen und bevorzugt gleiche Winkel zwischen benachbarten Armen einschließen. Im Falle eines dreiarmigen Griffteils sind benachbarte Arme bevorzugt mit einem Winkel von 120°, bei vier bevorzugt unter einem Winkel von 90° usw. angeordnet.

Nach einer äußerst vorteilhaften Ausgestaltung der Erfindung weist das Griffteil eine Verstelleinrichtung zum vorzugsweise stufenlosen Absenken bzw. Anheben des Abdeckelements zum bzw. vom Deckel auf. Hierdurch ist es möglich, die Durchbrechung des Deckels je nach den individuellen Bedürfnissen bzgl. des Gar- oder Kochvorganges vollständig zu schließen bzw. mehr oder weniger zu öffnen. So besteht bspw. die Möglichkeit, zum Beginn eines Gar- oder Kochvorganges die Durchbrechung zu öffnen, um die in der Anfangsphase vermehrt aus dem Gargut austretende Flüssigkeit austreten zu lassen, während bspw. am Ende des Garvorganges die Durchbrechung mittels des Abdeckelements vollständig oder jedenfalls zum Teil geschlossen werden kann. Natürlich sind auch individuell unterschiedliche Öffnungsdauern bzw. Schließdauern der Durchbrechung möglich, dies liegt im Ermessen des jeweiligen Benutzers.

In konstruktiv besonders einfacher Weise weist das Griffteil zum Absenken/Anheben des Abdeckelements in einem Mittelteil eine Bohrung mit einem Innengewinde auf, in der ein Verstellelement verdrehbar geführt und an der das Abdeckelement befestigt ist.

Dabei ist gemäß einer anderen vorteilhaften Ausführungsform der Erfindung das Verstellelement topfartig ausgebildet oder weist eine mittige Bohrung auf, wobei der Rand des Verstellelements ggf. mit Querstegen o. dgl. versehen ist, so daß auch bei etwaigen, auf dem Verstellelement vorhandenen Fett- oder Ölspritzer o. dgl. eine Verdrehung des Verstellelements durch den Benutzer ohne weiteres möglich ist.

Dabei hat es sich weiterhin als vorteilhaft erwiesen, in einer Ausnehmung oder Bohrung des Verstellelements ein Thermometer anzuordnen, mit welchem die Gar- oder Kochtemperatur in dem Gar- oder Kochgefäß, welches mit dem Deckel beaufschlagt ist, angezeigt werden kann.

Nach einer weiteren vorteilhaften Ausführungsform der Erfindung sind das Verstellelement und das Abdeckelement mittels eines lösbaren Verbindungselementes, insbesondere einer Schraube, einem Bolzen o. dgl. miteinander verbunden.

Dabei besteht das Verbindungselement aus wärmeleitfähigem Material, wie Eisen, Aluminium, Stahl o. dgl. und ist mit dem Thermometer wärmeleitend verbunden. Dadurch, daß das Verbindungselement einends das Abdeckelement durchdringt und anderenends wärmeleitend mit dem Thermometer in Verbindung steht, ist für eine genaue Temperaturerfassung der im Gargefäß bzw. Kochtopf herrschenden Gar- bzw. Kochtemperatur gesorgt. Selbst bei angehobenem Abdeckelement und somit geöffneter Durchbrechung des Deckels befindet sich das eine Ende des Verbindungselements direkt oberhalb des Gargutes und wird über die Wärmestrahlung bzw. den aufsteigenden Wasserdampf auf die im Gargefäß selbst herrschende Temperatur erwärmt, so daß auch in diesem Fall eine recht genaue Temperaturmessung gewährleistet ist.

In konstruktiv unaufwendiger Art ist das Abdeckelement i. w. als Kreisplatte o. dgl. ausgebildet. Die Herstellung des Abdeckelements ist somit kostengünstig, wobei der äußere, nach oben oder unten weisende Rand des Abdeckelements insbesondere wulstartig, bspw. durch Umbörteln o. dgl. Maßnahmen, ausgebildet sein kann. Ebenso besteht die Möglichkeit, den äußeren Rand mit einem Kunststoffmaterial o. dgl. wulstartig zu umspritzen.

Nach einer anderen vorteilhaften Maßnahme der Erfindung ist die Oberfläche des Abdeckelements konvex gewölbt, so daß aus der Durchbrechung austretender Wasserdampf o. dgl. in Richtung der Oberfläche des Deckels radial nach außen umgelenkt wird, so daß aufgrund der flächigen Verteilung und der Durchmischung des Wasserdampfes mit der Umgebungsluft eine Verbrennungsgefahr praktisch ausgeschlossen ist. Weiterhin sorgt diese konvexe Formgebung bei abgesenktem Abdeckelement für eine gut dichtende Anlage des Randes des Abdeckelements an der Oberfläche des Deckels.

Besonders vorteilhaft erweist sich die Maßnahme, zumindest den äußeren Randbereich des Abdeckelements flexibel auszubilden oder aus flexiblem Material herzustellen, wodurch die Dichtfunktion noch weiter verbessert wird.

Zur Gewährleistung eines sicheren Sitzes weist das Abdeckelement eine zentrale, i. w. kreisförmige Ausstülpung auf, die in eine Aufnahme des Verstellelements eintaucht. Somit ist das Abdeckelement bzgl. der Positionierung relativ zu dem Verstellelement formschlüssig gesichert, wobei das Verbindungselement dann lediglich zur Festlegung des Abdeckelements an dem Verstellelement dient.

Nach einer anderen vorteilhaften Ausführungsform der Erfindung ist ein Thermostat o. dgl. angeordnet, welcher für ein selbsttätiges, temperaturabhängiges Anheben und Absenken des Abdeckelements bzgl. der Durchbrechung ausgebildet ist. Durch diese Maßnahme ist dafür gesorgt, daß sich das Abdeckelement in Abhängigkeit von der im Gargefäß herrschenden Temperatur selbsttätig hinsichtlich der Positionierung zu der Durchbrechung des Deckels einstellt. So kann der Thermostat dahingehend ausgelegt sein, daß Temperaturen das Abdeckelement die Durchbrechung verschließt, während bei über einem Sollwert bzw. Sollwertbereich liegenden Temperaturen im Gargefäß der Thermostat das Abdeckelement selbsttätig von der Durchbrechung abhebt.

Um den Sitz des Deckels auf dem Gargefäß zu verbessern und um ein unbeabsichtigte Abrutschen des Deckels vom Gargefäß zu vermeiden, sind nach einer anderen bevorzugten Ausführungsform der Erfindung an einem bevorzugt äußeren Randbereich an der Unterseite des Deckels ein oder mehrere konzentrische Ringwülste oder Ringwulstabschnitte o. dgl. angeordnet bzw. angeformt. Die Positionierung dieser, ein Verrutschen des Deckels unterbindenden Halteelemente auf der Deckelunterseite ist derart gewählt, daß der Deckel auf verschiedene Gargefäße in Standardgrößen sicher aufsetzbar ist.

Desweiteren besteht nach einer weiteren vorteilhaften Ausführungsform der Erfindung auch die Möglichkeit, zur Verbesserung des Sitzes des Deckels auf dem Gargefäß an der Unterseite des Deckels ein oder mehrere ringförmig umlaufende Stufen, Absätze o. dgl. anzuordnen bzw. anzuformen.

Eine besonders kostengünstige Ausführungsform der Erfindung besteht darin, daß der Deckel von einem Glasboden mit einer zentrischen Durchbrechung gebildet ist und das Griffteil aus Blech o. dgl. besteht, wobei endseitige Abschnitte des Griffteils mittels Umbiegungen an dem Deckelrand befestigt sind. Da bei dieser Ausführungsform keine Nocken o. dgl. am Rand des Glasdeckels vorzusehen sind, besteht weiterhin die Möglichkeit, den Glasdeckel äußerst kostengünstig herzustellen.

Nach einer anderen Ausführungsform der Erfindung ist der Deckel von einem Glasboden mit einer zentrischen Durchbrechung gebildet, wobei der Glasboden umfangsseitig von einem Außenring bestehend aus Blech o. dgl. umfaßt ist und das Griffteil einstückig mit dem Außenring verbunden ist. Dabei kann der Außenring insbesondere einen nach oben gezogenen Rand o. dgl. aufweisen. Hierdurch wird eine Kostenreduzierung bei der Herstellung des Deckels erreicht, da der Glasboden selbst einen nach oben gezogenen Rand nicht aufweisen muß. Auch die einstückige Verbindung zwischen dem Griffteil und dem Blechteil sorgt für eine weitere Reduzierung des Fertigungsaufwandes dieser Ausführungsform des erfindungsgemäßen Deckels. Eine sichere und dauerhafte Fixierung des Außenringes bzw. Griffteils an dem Glasboden besteht darin, daß der Glasboden randseitig einen bevorzugt aus Blech bestehenden Ringschuh o. dgl. Profil, ggf. mit einem angeformten Steg, aufweist, welches Profil über eine Verbindung, bspw. eine Schraub-, Niet-, Kleboder Lötverbindung o. dgl. mit dem Griffteil bzw. dem Außenring verbunden ist.

Dabei hat es sich als vorteilhaft erwiesen, daß das Griffteil vier i. w. rechtwinklig zueinander angeordnete Arme aufweist, die sich von einem Mittelteil radial nach außen zum Deckelrand erstrecken und bevorzugt mittels endseitiger Umbiegungen am Deckel befestigt sind. Durch diese Maßnahme wird ein besonders stabiles Griffteil geschaffen.

Nach einer besonders vorteilhaften Ausgestaltung der Erfindung weist das Griffteil zwei, den Deckel radial überspannende, benachbart angeordnete Bügel auf.

Dabei hat es sich als vorteilhaft erwiesen, daß die endseitigen Abschnitte der benachbarten Bügel jeweils in einer Halterung gehalten sind, die den Deckelrand nach Art eines U-Profils umgreifen und insbesondere klemmend, rastend o. dgl. am Deckel festgelegt sind.

Eine äußerst einfache Betätigung des Abdeckelements ist dadurch gegeben, daß auf jedem Bügel ein Schieber verschiebbar geführt ist, wobei zwischen den Schiebern und dem Abdeckelement eine Gelenkanordnung zum Abheben bzw. Absenken des Abdeckelements angeordnet ist.

Die Gelenkanordnung weist von Vorteil jeweils einen Gelenkarm auf, der an dem Schieber und an einer Lagerung des Abdeckelements angelenkt ist.

Um ein unbeabsichtigtes Verstellen der Schieber und damit der Position des Abdeckelements zu vermeiden, ist es vorteilhaft, daß die Schieber an den Bügeln klemmend, rastend o. dgl. festlegbar sind.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen.

Es zeigen:

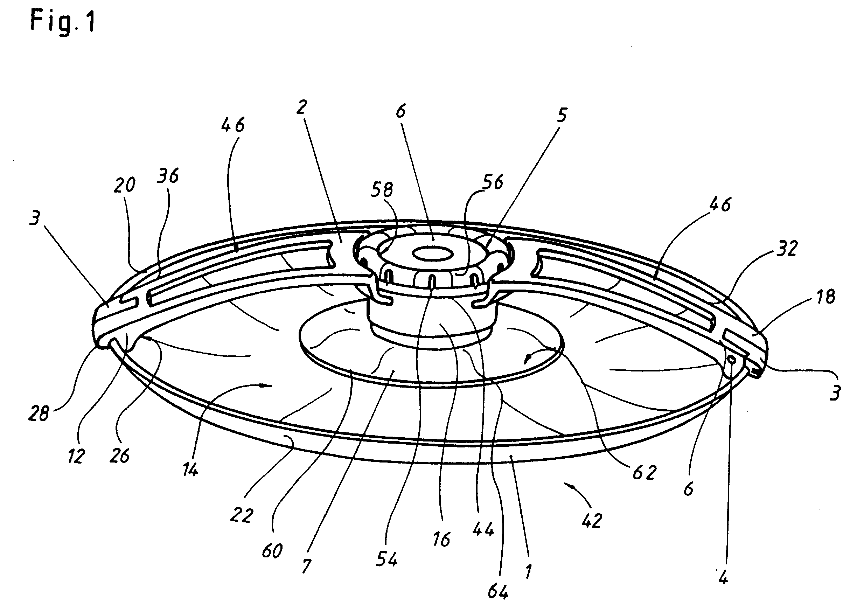

- Figur 1: eine isometrische Ansicht eines Ausführungsbeispiels des erfindungsgemäßen Deckels mit in Schließstellung befindlichen Verriegelungselementen,

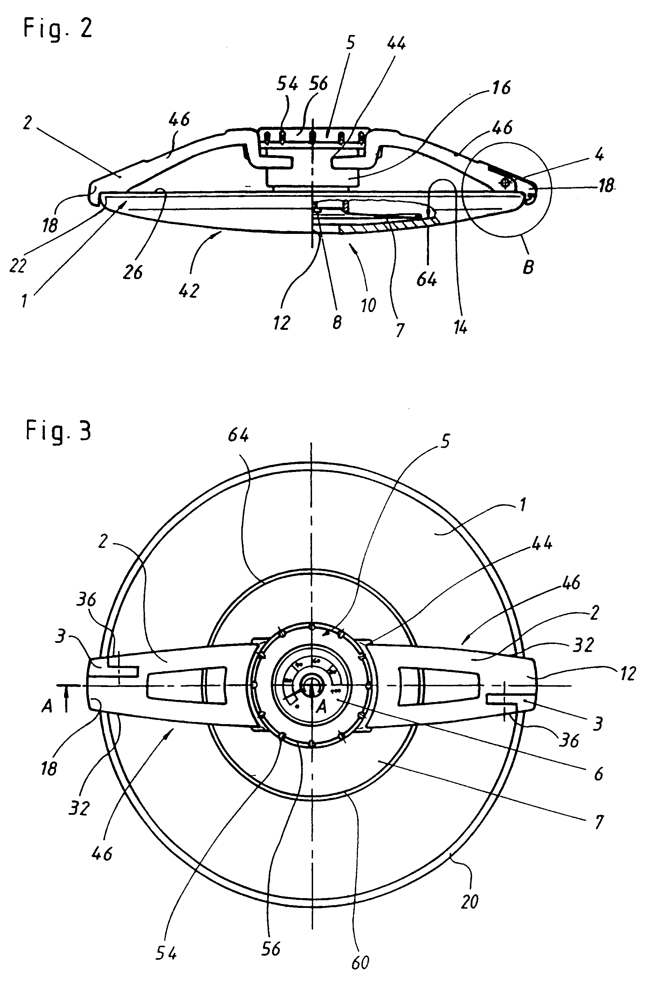

- Figur 2: eine Seitenansicht des Deckels der Figur 1, teilweise geschnitten,
- Figur 3: eine Draufsicht des Deckels der Figur 1,
- Figur 4: eine Seitenansicht des Deckels der Figur 1 jedoch mit geöffneten Verriegelungselementen,
- Figur 5: eine Draufsicht des Deckels der Figur 4,

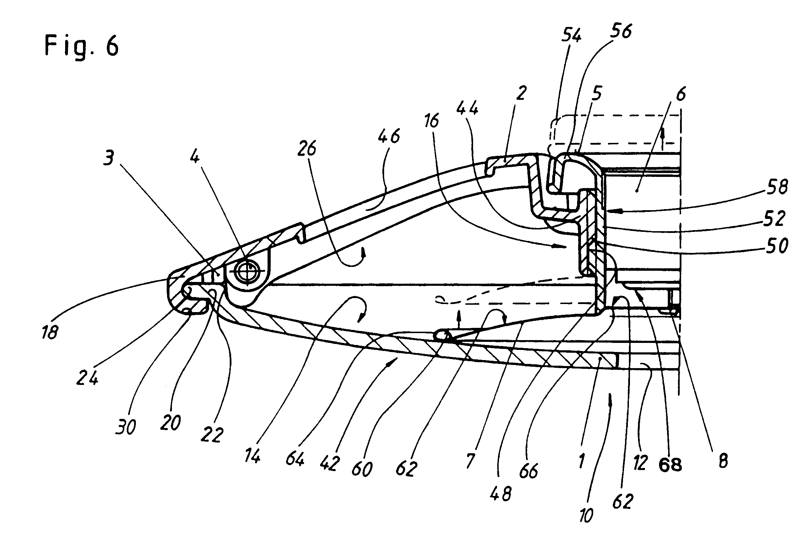

- Figur 6: einen Querschnitt durch den Deckel entlang der Schnittlinie A-A der Figur 3,

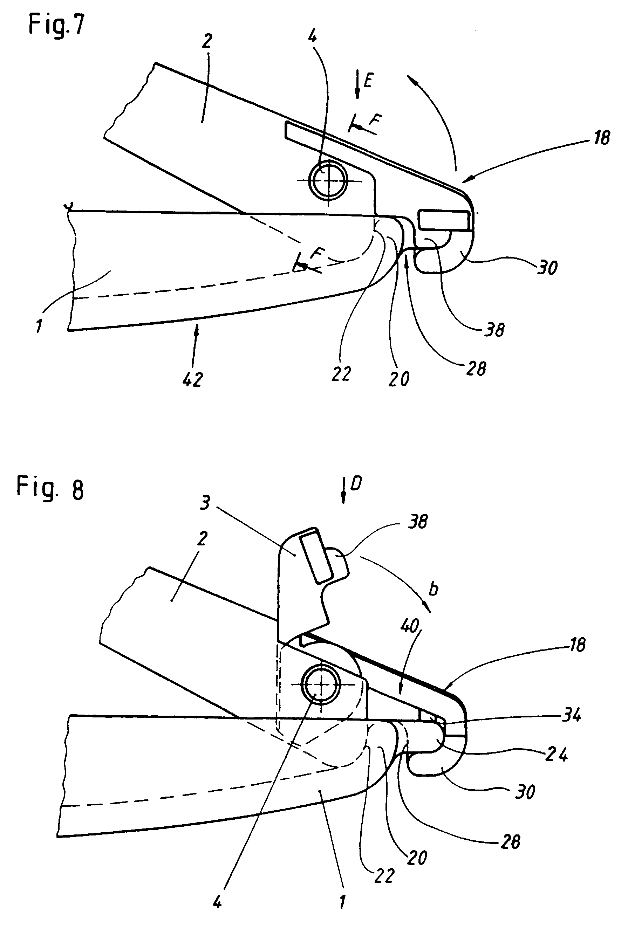

- Figur 7: eine Detailseitenansicht gemäß Ausschnitt B der Figur 2,
- Figur 8: eine Detailseitenansicht gemäß Ausschnitt C der Figur 4,

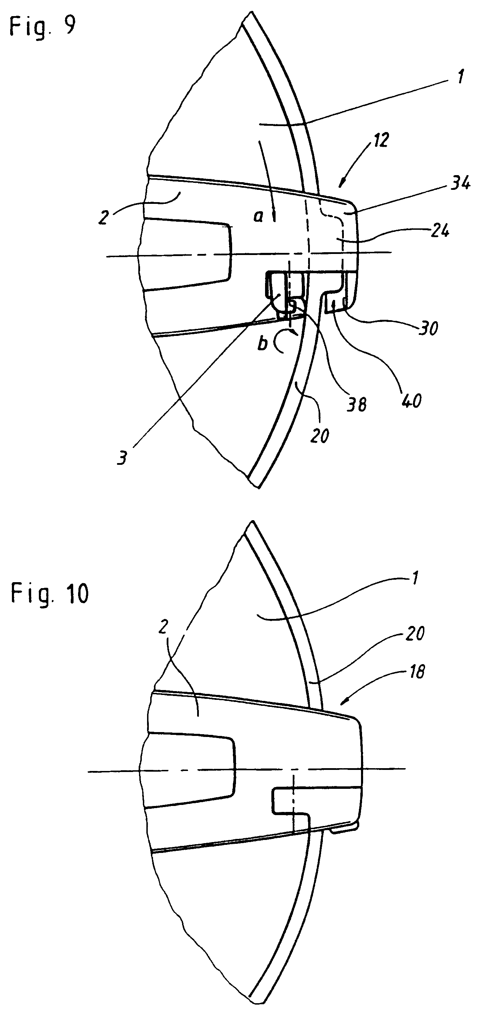

- Figur 9: eine Draufsicht der Detaildarstellung in Richtung D der Figur 8,
- Figur 10: eine Draufsicht der Detaildarstellung der Figur 7 in Richtung E,

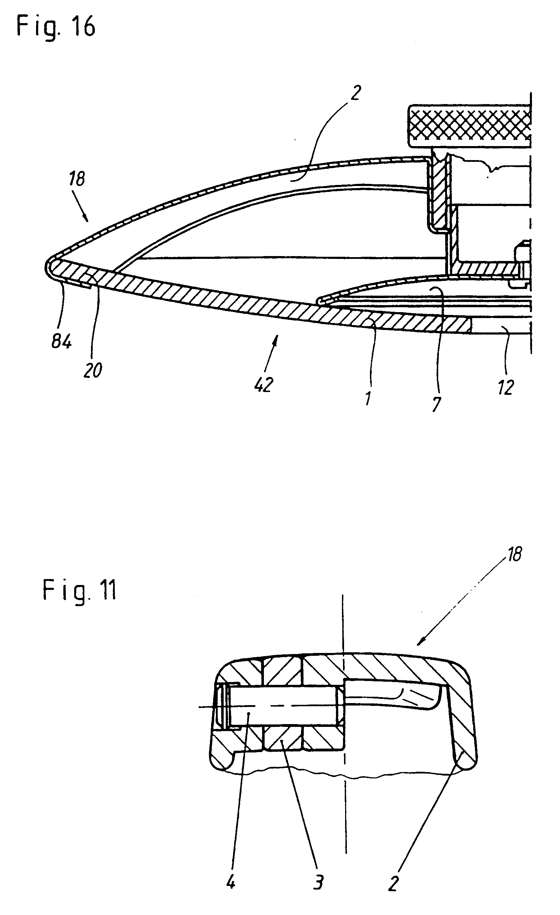

- Figur 11: einen Schnitt entlang der Schnittlinie F-F der Figur 7,
- Figur 12: eine Teilschnittdarstellung einer weiteren Ausführungsform der Erfindung mit einem Ringwulst auf der Unterseite des Deckels,
- Figur 13: eine Teilschnittdarstellung eines weiteren Ausführungsbeispiels der Erfindung mit einer ringförmig umlaufenden Stufe an der Unterseite des Deckels,
- Figur 14: eine Teilschnittdarstellung eines weiteren Ausführungsbeispiels der Erfindung mit einer Mehrzahl von ringförmig umlaufenden Stufen an der Unterseite des Deckels,
- Figur 15: eine Teilschnittdarstellung eines weiteren Ausführungsbeispiels der Erfindung, bei dem der Deckel aus einem Glasboden und einem Außenring besteht,
- Figur 16: eine Teilschnittdarstellung einer weiteren Ausführungsform der Erfindung, bei der das insbesondere aus Blech bestehende Griffteil mittels einer Umbiegung am Deckelrand befestigt ist,
- Figur 17: eine Draufsicht auf ein weiteres Ausführungsbeispiel der Erfindung mit einem aus vier Armen bestehenden Griffteil,
- Figur 18: eine Schnittdarstellung des Ausführungsbeispiels der Figur 17 entlang der Schnittlinie A-A,
- Figur 19: eine Draufsicht auf eine weitere Ausführungsform des Deckels mit einer modifizierten Verstelleinrichtung für das Abdeckelement und
- Figur 20: eine Seitenansicht, teilweise geschnitten des Ausführungsbeispiels der Figur 19.

Das in den Figuren dargestellte Ausführungsbeispiel des erfindungsgemäßen tellerförmigen Deckels 1 für Kochgeschirr, Gargefäße o. dgl., wie Kochtöpfe, Bratpfannen oder ähnliches, zeigt in verschiedenen Ansichten und Schnittdarstellungen einen Deckel 1, der in einem zentralen Mittelbereich 10 wenigstens eine Durchbrechung 12 aufweist. Dabei ist die wenigstens eine Durchbrechung 12 zentrisch angeordnet und weist einen kreisförmigen Querschnitt auf. Es können natürlich auch zwei oder mehrere Durchbrechungen im zentralen Mittelbereich 10 vorgesehen werden. Auf der Oberseite 14 des Deckels 1 ist ein, die wenigstens eine Durchbrechung 12 i. w. dachartig o. dgl. übergreifendes Abdeckelement 7 angeordnet und mittels einer Halterung 16 gehaltert.

Dabei ist die Halterung 16 als den Deckel 1 bügelartig überspannendes Griffteil 2 ausgebildet. Die endseitigen Abschnitte 18 des Griffteils 2 sind an dem Deckelrand 20 lösbar befestigt.

Der Deckelrand 20 wird durch eine nach oben gebogene Ringwand 22 gebildet, wobei diese Ringwand 22 im Ausführungsbeispiel zwei, diametral angeordnete, nach außen weisende Nasen 24, Laschen, Nocken o. dgl. aufweist. Je nach Anzahl der Arme 46 des Griffteils 2 können natürlich auch mehr als zwei Nasen 24 an der Ringwand 22 angeordnet sein.

Die endseitigen Abschnitte 18 des Griffteils 2 besitzen an der Unterseite 26 eine nut- oder rinnenartige Aufnahme 28, in welche die Ringwand 22 bei auf den Deckel 1 aufgesetztem Griffteil 2 eingreift. Desweiteren sind die endseitigen Abschnitte 18 des Griffteils 2 an der Unterseite 26 i. w. mit U-förmigen, hakenförmigen o. dgl. geformten, nach innen weisenden Umbiegungen 30 versehen. Diese Umbiegungen 30 untergreifen bzw. umgreifen die Nasen 24, Laschen, Nocken o. dgl. der Ringwand 22, sofern der Griffteil 2 an dem Deckel 1 befestigt ist.

Wenigstens eine, bevorzugt jede der Umbiegungen 30 weisen an einem ersten Seitenrand 32 des Griffteils 2 einen Anschlag 34 auf, der insbesondere als Querwand ausgebildet sein kann. Weiterhin sind an wenigstens einem, bevorzugt jedoch an mehreren oder auch allen Abschnitten 18 des Griffteils 2 jeweils ein Verriegelungselement 3 schwenkbar, kippbar o. dgl. gelagert, mit dem das Griffteil 2 am Deckelrand 20 gegen' versehentliches Lösen sicherbar ist. Hierzu ist das Verriegelungselement 3 an einem zweiten Seitenrand 36 des Griffteils 2 angeordnet und besitzt einen Anschlag 38, insbesondere eine Zunge, Nase, Lasche o. dgl., die in der Verriegelungsstellung seitlich der Nase 24 des Deckelrandes 20 des Deckels 2 anliegt.

Das Verriegelungselement 3 ist mit einem Bolzen 4 o. dgl., der insbesondere quer zur Längserstreckung des Griffteils 2 angeordnet ist, an dem endseitigen Abschnitt 18 des Griffteils 2 schwenkbar, kippbar o. dgl. gelagert. In der Schließstellung ist das Verriegelungselement 3 von einer entsprechend angepaßten Ausnehmung 40 des endseitigen Abschnitts 18 i. w. vollständig aufgenommen. Ferner ist das Verriegelungselement 3 in der Schließstellung mittels einer Rastnase o. dgl. verrastbar und gegen unbeabsichtigte Überführen in die Öffnungsstellung gesichert.

Die Oberseite 14 des Deckels 1 ist i. w. konkav gewölbt ausgebildet. Dabei besteht der Deckel 1 aus Glas, Keramik o. dgl., wobei die Unterseite 42 des Deckels 1 ggf. durch Sandstrahlen, Bedrucken, Anbringen von Noppen oder eines Dekors aufgerauht ist.

Das Griffteil 2 besitzt ein Mittelteil 44 zur Anbringung und/oder Halterung des Abdeckelements 7, wobei sich von dem Mittelteil 44 im Ausführungsbeispiel zwei, ggf. auch drei oder mehr Arme 46 zum Deckelrand 20 erstrecken. Die Arme 46 des Griffteils 2 weisen gemäß der bevorzugten Ausführungsform diametral nach außen, können aber auch insbesondere bei der Anbringung von mehr als zwei Armen 46 i. w. gleiche Winkel zwischen benachbarten Armen 46 einschließen. Dieser Winkel beträgt bei drei Armen ca. 120°, bei vier Armen ca. 90° usw. Zum insbesondere stufenlosen Absenken/Anheben des Abdeckelements 7 zum bzw. vom Deckel 1 weist das Griffteil eine Verstelleinrichtung 5 auf. Hierzu ist in dem Mittelteil 44 des Griffteils 2 eine Bohrung 48 mit einem Innengewinde 50 vorgesehen, in der ein Verstellelement 52 verdrehbar geführt und an der das Abdeckelement 7 befestigt ist. Das Verstellelement 52 selbst ist topfartig ausgebildet oder besitzt eine Bohrung und ist ggf. mit Querstegen 54 o. dgl. versehen, wobei die Querstege 54 an einem Rand 56 des Verstellelements 52 angeordnet sind. In einer Ausnehmung 58 oder Bohrung des Verstellelements 52 ist ein Thermometer 6 aufgenommen, mit dem die im Gar- oder Kochgefäß herrschende Gar- oder Kochtemperatur zur Anzeige gebracht werden kann.

Das Verstellelement 52 und das Abdeckelement 7 sind mittels eines lösbaren Verbindungselements 8, insbesondere einer Schraube, einem Bolzen o. dgl. miteinander verbunden. Das Verbindungselement 8 besteht aus wärmeleitfähigem Material, bspw. Eisen, Aluminium oder Stahl und ist mit dem Thermometer 6 wärmeleitend verbunden.

Das Abdeckelement 7 ist als Kreisplatte 60 o. dgl. ausgebildet und weist einen randseitigen Wulst auf. Die Oberfläche 62 des Abdeckelements 7 besitzt eine konvexe Wölbung. Zumindest der äußere Rand 64 des Abdeckelements 7 ist flexibel ausgebildet oder besteht aus flexiblem Material. Ferner weist das Abdeckelement 7 eine zentrale, i. w. kreisförmige Ausstülpung 66 auf, die in eine Aufnahme 68 des Verstellelements 52 eintaucht.

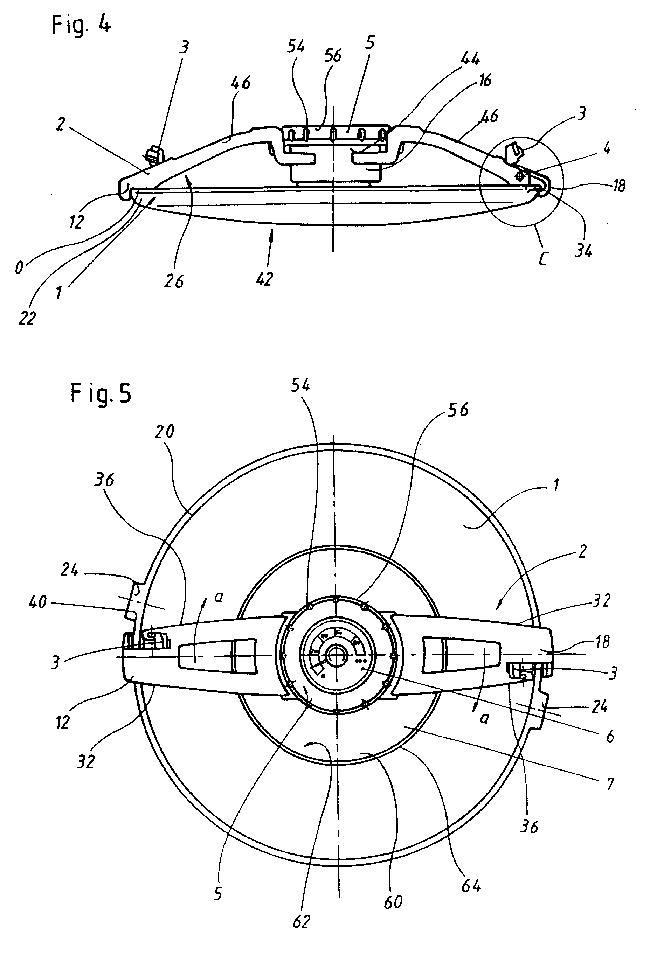

Das Griffteil 2 wird zur Befestigung an dem Deckel 1 entsprechend der Darstellung der Figur 5 seitlich benachbart der Nasen 24 des Deckels 1 aufgesetzt, wobei die Ringwand 22 des Deckels 1 in die Aufnahmen 28 der endseitigen Abschnitte 18 des Griffteils 2 eintaucht, so daß das Griffteil auf der Ringwand 22 des Deckels 1 verdrehbar geführt ist. Zur Herstellung einer Verbindung zwischen dem Griffteil 2 und dem Deckel 1 wird das Griffteil 2 in Pfeilrichtung A gemäß Figur 5 verdreht, so daß die Nasen 24 von dem Umbiegungen 32 umgriffen bzw. untergriffen werden. Die Drehbewegung des Griffteils 2 bzgl. des Deckels 1 zur Herstellung der Verbindung wird durch den Anschlag 34 an dem Umbiegungen 30 begrenzt. Um ein unbeabsichtigte Lösen des Griffteils 2 vom Deckel 1 zu unterbinden, werden die Verriegelungselemente 3 in die Schließstellung überführt, wobei ein in den Verriegelungselementen 3 vorgesehener Anschlag 38 sich seitlich der Nase 24 des Deckels 2 anlegt. In dieser Schließstellung der Verriegelungselemente 3 ist somit ein Verdrehen des Griffteils 2 bzgl. des Deckels unterbunden.

Ein Lösen des Griffteils 2 vom Deckel 1, bspw. zum Zwecke der Reinigung wird in umgekehrter Reihenfolge durchgeführt.

Mittels der Verstelleinrichtung 5 kann das Abdeckelement 7 stufenlos auf die Oberseite 14 des Deckels 1 abgesenkt bzw. von dieser Oberseite 14 abgehoben werden. In dem Verstellelement 52 selbst ist in einer Ausnehmung 58 oder einer Bohrung ein Thermometer 6 angeordnet, welches über das Verbindungselement 8 thermisch an den Innenraum des Gargefäßes angekoppelt ist. Weiterhin dient das Verbindungselement 8 zur Festlegung des Abdeckelements 7 an dem Verstellelement 52.

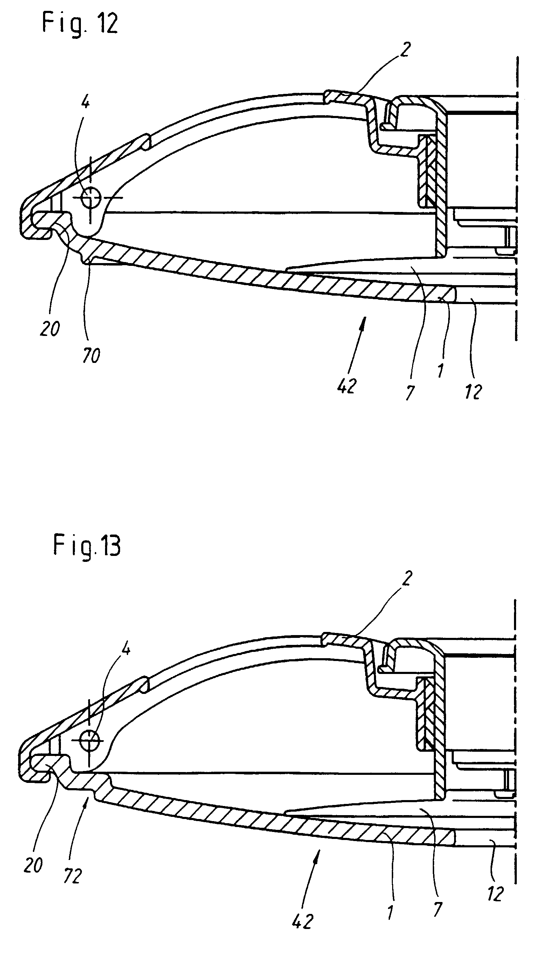

Weitere Modifikationen und besondere Ausführungsformen des erfindungsgemäßen Deckels sind in den Figuren 12, 13 und 14 dargestellt, wobei auf der Unterseite 42 des Deckels 1 ein Ringwulst 70, eine ringförmig umlaufende Stufe 72 bzw. ein Absatz oder auch mehrere solcher Wülste bzw. Stufen 72, 74 und 76 vorgesehen sind. Diese Ringwulste bzw. Stufungen oder Absätze sind derart auf der Unterseite 42 des Deckels 1 positioniert bzw. in ihrem Durchmesser dimensioniert, daß sie als Widerlager an dem Rand der Kochgefäße anliegen, die genormte bzw. standardisierte Abmessungen bzw. Durchmesser aufweisen.

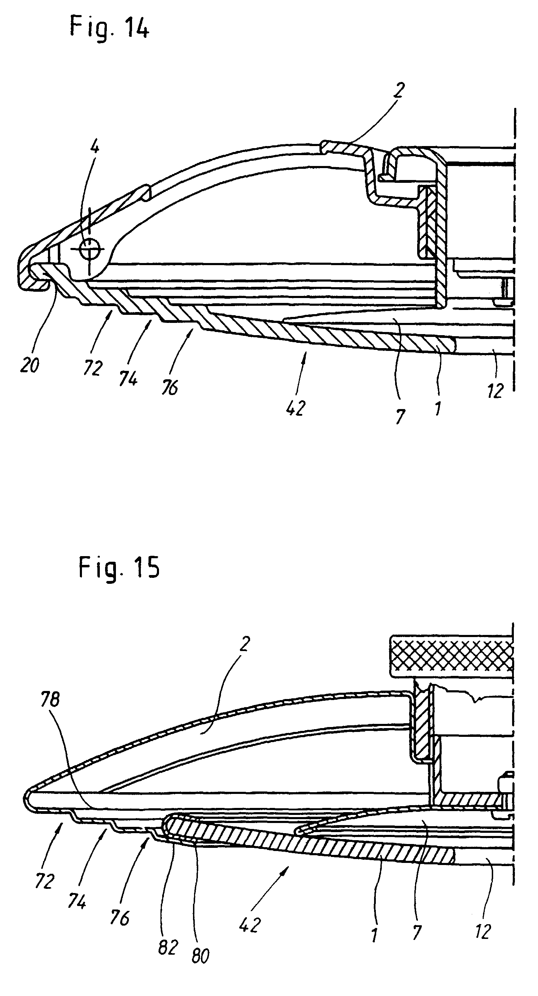

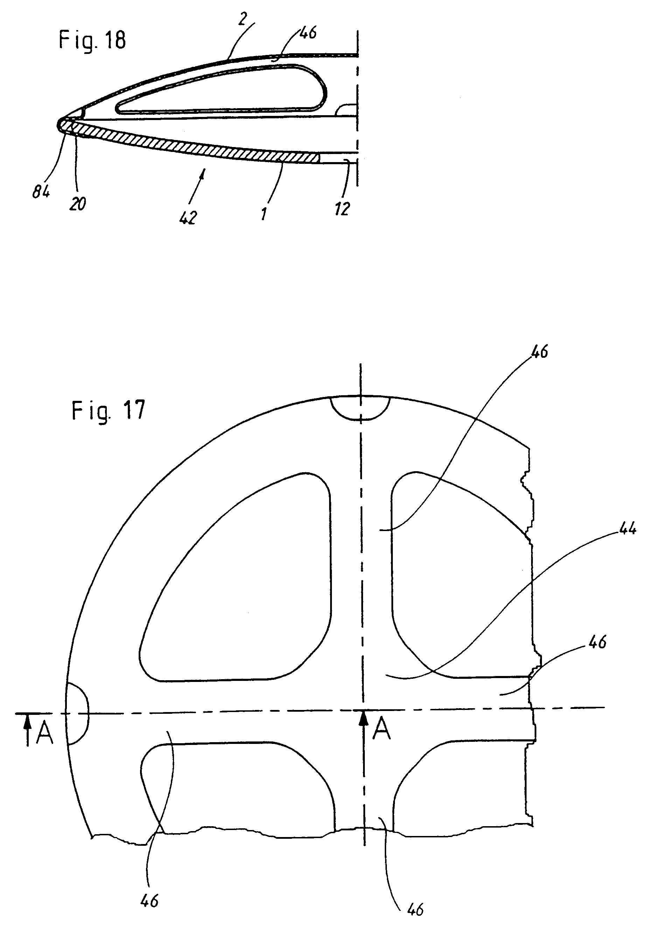

Nach der Ausführungsform der Figuren 15 und 16 ist der Deckel 1 von einem Glasboden mit einer zentrischen Durchbrechung 12 gebildet und besteht das Griffteil 2 aus Blech o. dgl. Während beim Ausführungsbeispiel der Figur 16 endseitige Abschnitte 18 des Griffteils 2 mittels Umbiegungen 84 an dem Deckelrand 20 befestigt sind, ist bei dem Ausführungsbeispiel der Figur 15 der Glasboden umfangsseitig von einem Außenring 78 umgeben. In beiden Fällen können am Außenrand des Glasboden ansonsten vorgesehene Nocken o. dgl. entfallen. Weiterhin kann bei dem Ausführungsbeispiel der Figur 15 auch ein bspw. nach oben gezogener Rand 20 entfallen, da dieser Rand durch den Außenring 78 gebildet ist.

Weiterhin ist im Ausführungsbeispiel der Figur 15 vorgesehen, daß der Glasboden randseitig einen bevorzugt aus Blech bestehenden Ringschuh 82 o. dgl. Profil, ggf. mit einem angeformten Steg, aufweist, wobei das Profil über eine Verbindung 80, bspw. eine Schraub-, Niet-, Klebe- oder Lötverbindung o. dgl. mit dem Außenring 78 verbunden ist. Natürlich besteht auch die Möglichkeit, eine vergleichbare Verbindung zwischen dem Außenrand des Glasbodens und einem randseitigen Abschnitt des Griffteils 2 vorzusehen.

Das Ausführungsbeispiel der Figuren 17, 18 zeichnet sich dadurch aus, daß das Griffteil 4 i. w. rechtwinklig zueinander angeordnete Arme 46 aufweist, die sich von einem Mittelteil 44 radial nach außen zum Deckelrand 20 erstrecken und bevorzugt mittels endseitigen Umbiegungen 84 am Deckel 1 befestigt sind.

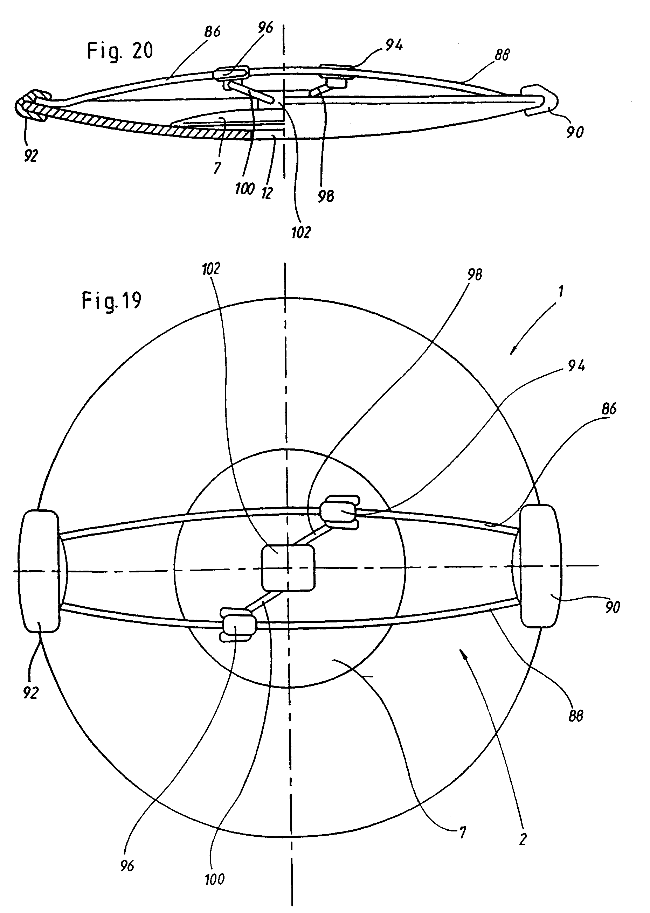

Eine weitere, bevorzugte Ausführungsform der Erfindung besteht darin, daß das Griffteil 2 aus zwei, den Deckel 1 radial überspannenden, benachbart angeordneten Bügeln 86, 88 besteht, wie dies in den Figuren 19, 20 dargestellt ist. Dabei sind die endseitigen Abschnitte der benachbarten Bügel 86, 88 jeweils in einer Halterung 90, 92 gehalten, die den Deckelrand 20 nach Art eines U-Profils umgreifen und insbesondere klemmend, rastend o. dgl. am Deckel 1 festgelegt sind. Natürlich besteht auch die Möglichkeit, diese Halterungen 90, 92 durch Kleben o. dgl. Verfahren am Deckel 1 zu befestigen.

Auf jeden Bügel 86, 88 ist ein Schieber 94, 96 verschiebbar geführt, wobei zwischen den Schiebern 94, 96 und dem Abdeckelement 7 eine Gelenkanordnung zum Abheben bzw. Absenken des Abdeckelements 7 angeordnet ist. Die Gelenkanordnung weist jeweils ein Gelenkarm 98, 100 auf, der an dem Schieber 94, 96 und einer Lagerung 102 des Abdeckelements 7 angelenkt ist. Die Schieber 94, 96 sind dabei klemmend, rastend o. dgl. an den Bügeln 86, 88 festlegbar. Durch ein Verschieben der Schieber 94, 96 entlang der Bügel 86, 88 kann somit das Abdeckelement 7 von der Durchbrechung 12 abgehoben bzw. auf diese Durchbrechung 12 abgesenkt werden. Diese alternative Konstruktion zur Betätigung des Abdeckelements 7 stellt im Vergleich zu der vorher beschriebenen Ausführungsform eine äußerst kostengünstige Alternative dar.

### Bezugszeichenliste

- 1: - Deckel
- 2: - Griffteil
- 3: - Verriegelungselement
- 4: - Bolzen
- 5: - Verstelleinrichtung
- 6: - Thermometer
- 7: - Abdeckelement
- 8: - Verbindungselement
- 10: - Mittelbereich
- 12: - Durchbrechung
- 14: - Oberseite
- 16: - Halterung
- 18: - endseitiger Abschnitt
- 20: - Deckelrand
- 22: - Ringwand
- 24: - Nase
- 26: - Unterseite
- 28: - Aufnahme
- 30: - Umbiegung
- 32: - erster Seitenrand
- 34: - Anschlag
- 36: - zweiter Seitenrand
- 38: - Anschlag
- 40: - Ausnehmung
- 42: - Unterseite
- 44: - Mittelteil
- 46: - Arm
- 48: - Bohrung
- 50: - Innengewinde
- 52: - Verstellelement
- 54: - Quersteg
- 56: - Rand
- 58: - Ausnehmung
- 60: - Kreisplatte
- 62: - Oberfläche
- 64: - äußerer Rand
- 66: - Ausstülpung
- 68: - Aufnahme
- 70: - Ringwulst
- 72: - Stufe, Absatz
- 74: - Stufe, Absatz
- 76: - Stufe, Absatz
- 78: - Außenring
- 80: - Verbindung
- 82: - Ringschuh, U-Profil
- 84: - Umbiegung
- 86: - Bügel
- 88: - Bügel
- 90: - Halterung
- 92: - Halterung
- 94: - Schieber
- 96: - Schieber
- 98: - Gelenkarm
- 100: - Gelenkarm
- 102: - Lagerung

## Patentansprüche

1. Tellerförmiger Deckel (1) für Kochgeschirr, Gargefäße o. dgl., wie Kochtopf oder Bratpfanne, der in einem zentralen Mittelbereich (10) wenigstens eine Durchbrechung (12) aufweist, wobei, vorzugsweise auf der Oberseite (14) des Deckels (1), ein die wenigstens eine Durchbrechung (12) dachartig übergreifendes Abdeckelement (7) mittels einer Halterung (16) gehaltert ist, dadurch gekennzeichnet, daß die Halterung (16) als den Deckel (1) bügelartig überspannendes Griffteil (2) ausgebildet ist und die endseitigen Abschnitte (18) des Griffteils (2) an dem Deckelrand (20) befestigt sind.

2. Deckel nach Anspruch 1, dadurch gekennzeichnet, daß das Griffteil (2) lösbar an dem Deckelrand (20) befestigt ist.

3. Deckel nach einem der vorhergehenden Ansprüche, dadurch gekennzeichnet, daß der Deckelrand (20) durch eine nach oben gebogene Ringwand (22) gebildet ist, wobei die Ringwand (22) radial nach außen weisende Nasen (24), Laschen, Nocken o. dgl. aufweist.

4. Deckel nach Anspruch 3, dadurch gekennzeichnet, daß die endseitigen Abschnitte (18) des Griffteils (2) an der Unterseite (26) eine nut- oder rinnenartige Aufnahme für die Ringwand (22) aufweisen.

5. Deckel nach einem der vorhergehenden Ansprüche 3 oder 4, dadurch gekennzeichnet, daß die endseitigen Abschnitte (18) des Griffteils (2) an der Unterseite (26) eine i. w. U-förmige, hakenförmige o. dgl. geformte, nach innen weisende Umbiegung (30) besitzen, mit welcher Umbiegung (30) die Nase (24), Lasche, der Nocken o. dgl. umgreifbar, untergreifbar bzw. hintergreifbar ist.

6. Deckel nach Anspruch 5, dadurch gekennzeichnet, daß die Umbiegung (30) an einem ersten Seitenrand (32) des Griffteils (2) einen Anschlag (34), insbesondere eine Querwand o. dgl. aufweist.

7. Deckel nach einem der vorhergehenden Ansprüche, dadurch gekennzeichnet, daß an wenigstens einem endseitigen Abschnitt (18) des Griffteils (2) ein Verriegelungselement (3), ein Schieber o. dgl. schwenkbar, kippbar o. dgl. gelagert ist, mit dem das Griffteil (2) am Deckelrand (20) gegen versehentliches Lösen sicherbar ist.

8. Deckel nach Anspruch 7, dadurch gekennzeichnet, daß das Verriegelungselement (3) im Bereich eines zweiten Seitenrandes (36) des Griffteils (2) angeordnet ist und einen Anschlag (38), insbesondere eine Zunge, Nase, Lasche o. dgl. aufweist, die in der Verriegelungsstellung seitlich der Nase (24) des Deckels (2) anliegt.

9. Deckel nach einem der Ansprüche 7 oder 8, dadurch gekennzeichnet, daß das Verriegelungselement (3) insbesondere mit einem Bolzen (4) o. dgl., der insbesondere quer zur Längserstreckung des Griffteils bzw. eines Arms (46) des Griffteils (2) angeordnet ist, im Bereich eines endseitigen Abschnitts des Griffteils (2) schwenkbar, kippbar o. dgl. gelagert ist.

10. Deckel nach einem der Ansprüche 7 bis 9, dadurch gekennzeichnet, daß das Verriegelungselement (3) in der Schließstellung von einer entsprechend angepaßten Ausnehmung (40) des endseitigen Abschnitts (18) i. w. vollständig aufgenommen ist.

11. Deckel nach einem der Ansprüche 7 bis 10, dadurch gekennzeichnet, daß das Verriegelungselement (3) in der Schließstellung mittels einer Rastnase o. dgl. verrastbar ist.

12. Deckel nach einem der vorhergehenden Ansprüche, dadurch gekennzeichnet, daß die Oberseite (14) des Deckels (1) i. w. konkav gewölbt ausgebildet ist.

13. Deckel nach einem der vorhergehenden Ansprüche, dadurch gekennzeichnet, daß der Deckel (1) aus Glas, Keramik, Kunststoff und/oder Metall o. dgl. besteht, wobei die Unterseite (42) des Deckels (1) ggf. durch Sandstrahlen, Bedrucken, Anbringung von Noppen oder eines Dekors aufgerauht ist.

14. Deckel nach einem der vorhergehenden Ansprüche, dadurch gekennzeichnet, daß das Griffteil (2) ein Mittelteil (44) zur Anbringung und/oder Halterung des Abdeckelements (7) aufweist, von welchem Mittelteil (44) sich zwei, ggf. auch drei oder mehr Arme (46) zum Deckelrand (20) erstrecken.

15. Deckel nach Anspruch 14, dadurch gekennzeichnet, daß die Arme (46) des Griffteils (2) diametral nach außen weisend oder i. w. gleiche Winkel zwischen benachbarten Armen (46) einschließend, angeordnet sind.

16. Deckel nach einem der vorhergehenden Ansprüche, dadurch gekennzeichnet, daß das Griffteil (2) eine Verstelleinrichtung (5) zum vorzugsweise stufenlosen Absenken bzw. Anheben des Abdeckelements (7) zum bzw. vom Deckel (1) aufweist.

17. Deckel nach Anspruch 16, dadurch gekennzeichnet, daß das Griffteil (2) in einem Mittelteil (44) eine Bohrung (48) mit einem Innengewinde (50) aufweist, in der ein Verstellelement (52) verdrehbar geführt und an der das Abdeckelement (7) befestigt ist.

18. Deckel nach Anspruch 16 oder 17, dadurch gekennzeichnet, daß das Verstellelement (52) topfartig ausgebildet ist oder eine Bohrung aufweist und ggf. einen mit Querstegen (54) o. dgl. versehen Rand (56) besitzt.

19. Deckel nach einem der Ansprüche 16 bis 18, dadurch gekennzeichnet, daß in einer Ausnehmung (58) oder Bohrung des Verstellelements (52) ein Thermometer (6) aufgenommen ist zur Anzeige der Gar- oder Kochtemperatur in dem Gar- oder Kochgefäß, welches mit dem Deckel (1) beaufschlagt ist.

20. Deckel nach einem der Ansprüche 16 bis 19, dadurch gekennzeichnet, daß das Verstellelement (52) und das Abdeckelement (7) mittels eines lösbaren Verbindungselements (8), insbesondere Schraube, Bolzen o. dgl., miteinander verbunden sind.

21. Deckel nach Anspruch 20, dadurch gekennzeichnet, daß das Verbindungselement (8) aus wärmeleitfähigem Material, wie Eisen, Aluminium, Stahl o. dgl. besteht und mit dem Thermometer (6) wärmeleitend verbunden bzw. gekoppelt ist.

22. Deckel nach einem der vorhergehenden Ansprüche, dadurch gekennzeichnet, daß das Abdeckelement (7) i. w. als Kreisplatte (60) ausgebildet ist und bevorzugt einen randseitigen nach oben oder unten gerichteten Wulst o. dgl. aufweist.

23. Deckel nach einem der vorhergehenden Ansprüche, dadurch gekennzeichnet, daß die Oberfläche des Abdeckelements (7) konvex gewölbt ausgebildet ist.

24. Deckel nach einem der vorhergehenden Ansprüche, dadurch gekennzeichnet, daß zumindest der äußere Rand (64) des Abdeckelements (7) flexibel ist oder aus flexiblem Material besteht.

25. Deckel nach einem der vorhergehenden Ansprüche, dadurch gekennzeichnet, daß das Abdeckelement (7) eine zentrale, i. w. kreisförmige Ausstülpung (66) aufweist, die in eine Aufnahme (68) des Verstellelements (52) eintaucht.

26. Deckel nach einem der vorhergehenden Ansprüche, dadurch gekennzeichnet, daß in einer Ausnehmung (58) des Verstellelements (52) ein Thermostat o. dgl. angeordnet ist, welcher für ein selbsttätiges, temperaturabhängiges Anheben und Absenken des Abdeckelements (7) bzgl. der Durchbrechung (1) ausgebildet ist.

27. Deckel nach einem der vorhergehenden Ansprüche, dadurch gekennzeichnet, daß in einem bevorzugt äußeren Randbereich an der Unterseite (42) des Deckels (1) ein oder mehrere konzentrische Ringwülste (70) oder Ringwulstabschnitte o. dgl. angeordnet bzw. angeformt sind.

28. Deckel nach einem der Ansprüche 1 bis 26, dadurch gekennzeichnet, daß in einem bevorzugt äußeren Randbereich an der Unterseite (42) des Deckels (1) ein oder mehrere ringförmig umlaufende Stufen (72, 74, 76), Absätze o. dgl. angeordnet bzw. angeformt sind.

29. Deckel nach einem der Ansprüche 1 bis 3, 12 bis 28, dadurch gekennzeichnet, daß der Deckel (1) von einem Glasboden mit einer zentrischen Durchbrechung (12) gebildet ist und das Griffteil (2) aus Blech o. dgl. besteht, wobei endseitige Abschnitte (18) des Griffteils (2) mittels Umbiegungen (84) an dem Deckelrand (20) befestigt sind.

30. Deckel nach einem der Ansprüche 1 bis 3, 12 bis 28, dadurch gekennzeichnet, daß der Deckel (1) von einem Glasboden mit einer zentrischen Durchbrechung (12) gebildet ist, wobei der Glasboden umfangsseitig von einem Außenring (78) bestehend aus Blech o. dgl. umfaßt ist und das Griffteil (2) einstückig mit dem Außenring (78) verbunden ist.

31. Deckel nach Anspruch 29 oder 30, dadurch gekennzeichnet, daß der Glasboden randseitig einen bevorzugt aus Blech bestehenden Ringschuh (82) o. dgl. Profil, ggf. mit einem angeformten Steg, aufweist, welches Profil über eine Verbindung (80), bspw. einer Schraub-, Niet-, Klebe- oder Lötverbindung o. dgl. mit dem Griffteil (2) bzw. dem Außenring (78) verbunden ist.

32. Deckel nach einem der Ansprüche 1 bis 3, 12 bis 28, dadurch gekennzeichnet, daß das Griffteil (2) vier i. w. rechtwinklig zueinander angeordnete Arme (46) aufweist, die sich von einem Mittelteil (44) radial nach außen zum Deckelrand (20) erstrecken und bevorzugt mittels endseitiger Umbiegungen (84) am Deckel (1)befestigt sind.

33. Deckel nach einem der Ansprüche 1 bis 3, 12 bis 16, 22 bis 28, dadurch gekennzeichnet, daß das Griffteil (2) aus zwei, den Deckel (1) radial überspannende, benachbart angeordneten Bügeln (86, 88) besteht.

34. Deckel nach Anspruch 33, dadurch gekennzeichnet, daß die endseitigen Abschnitte der benachbarten Bügel (86, 88) jeweils in einer Halterung (90, 92) gehalten sind, die den Deckelrand (20) nach Art eines U-Profils umgreifen und insbesondere klemmend, rastend o. dgl. am Deckel (1) festgelegt sind.

35. Deckel nach einem der Ansprüche 33 oder 34, dadurch gekennzeichnet, daß auf jedem Bügel (86, 88) ein Schieber (94, 96) verschiebbar geführt ist, wobei zwischen den Schiebern (94, 96) und dem Abdeckelement (7) eine Gelenkanordnung zum Abheben bzw. Absenken des Abdeckelements (7) angeordnet ist.

36. Deckel nach Anspruch 35, dadurch gekennzeichnet, daß die Gelenkanordnung jeweils einen Gelenkarm (98, 100) aufweist, der an dem Schieber (94, 96) und an einer Lagerung (102) des Abdeckelements (7) angelenkt ist.

37. Deckel nach einem Ansprüche 35 bis 36, dadurch gekennzeichnet, daß die Schieber (94, 96) an den Bügeln (86, 88) klemmend, rastend o. dgl. festlegbar sind.

## Claims

1. Plate-shaped lid (1) for kitchenware, cooking vessels or the like, such as cooking pot or frying pan, which has at least one passage (12) in a central middle region (10), wherein a covering element (7), which in the manner of a roof engages over the at least one passage (12), is retained by means of a mounting (16) preferably on the upper side (14) of the lid (1), characterised in that the mounting (16) is constructed as a handle (2) spanning over the lid (1) in the manner of a bracket and the end portions (18) of the handle (2) are fastened at the lid rim (20).

2. Lid according to claim 1, characterised in that the handle (2) is fastened at the lid rim (20) to be detachable.

3. Lid according to one of the preceding claims, characterised in that the lid rim (20) is formed by an upwardly bent annular wall (22), wherein the annular wall (22) comprises lugs (24), straps, dogs or the like, which face radially outwards.

4. Lid according to claim 1, characterised in that the end portions (18) of the handle (2) at the underside (26) have a groove-shaped or channel-shaped receptacle for the annular wall (22).

5. Lid according to one of the preceding claims 3 or 4, characterised in that the end portions (18) of the handle (2) at the underside (26) have a substantially U-shaped, hook-shaped or similarly shaped, inwardly facing bent-over portion (30), by which bent-over portion (30) the lug (24), the strap, the dog or the like can be engaged around, underneath or behind.

6. Lid according to claim 5, characterised in that the bent-over portion (30) comprises an abutment (34), in particular a transverse wall or the like, at a first side rim (32) of the handle (2).

7. Lid according to one of the preceding claims, characterised in that a latching element (3), a slide or the like, by which the handle (2) is securable at the lid rim (20) against unintentional loosening, is borne at at least one end portion (18) of the handle (2) to be pivotable, tiltable or the like.

8. Lid according to claim 7, characterised in that the latching element (3) is arranged in the region of a second side rim (36) of the handle (2) and comprises an abutment (38), in particular a tongue, lug, strap or the like, which in the latched setting lies laterally against the lug (24) of the lid (2).

9. Lid according to one of the claims 7 or 8, characterised in that the latching element (3) is arranged, in particular by a pin (4) or the like, which is in particular arranged transversely to the longitudinal extent of the handle (2) or of an arm (46) of the handle (2), to be pivotable, tiltable or the like in the region of an end portion of the handle (2).

10. Lid according to one of the claims 7 to 9, characterised in that the latching element (3) is in the closed setting received substantially completely by an appropriately adapted recess (40) of the end portion (18).

11. Lid according to one of the claims 7 to 10, characterised in that the latching element (3) is in the closed setting detentable by means of a detent lug or the like.

12. Lid according to one of the preceding claims, characterised in that the upper side (14) of the lid (1) is shaped to be substantially concavely curved.

13. Lid according to one of the preceding claims, characterised in that the lid (1) consists of glass, ceramic, synthetic material and/or metal or the like, wherein the underside (42) of the lid (1) is roughened, in a given case by sand-blasting, printing or the like application of knubs or a decoration.

14. Lid according to one of the preceding claims, characterised in that the handle (2) comprises a middle part (44) for the attachment and/or mounting of the covering element (7), from which middle part (44) two, in a given case also three or more, arms (46) extend to the lid rim (20).

15. Lid according to claim 14, characterised in that the arms (46) of the handle (2) are arranged to be facing diametrally outwards or to be at substantially equal angles between neighbouring arms (46).

16. Lid according to one of the preceding claims, characterised in that the handle (2) comprises an adjusting equipment (5) for the preferably stepless lowering or raising of the covering element (7) respectively off from or onto the lid (1).

17. Lid according to claim 16, characterised in that the handle (2) in a middle part (44) thereof has a bore (48) with an internal thread (50), in which an adjusting element (52) is guided to be rotatable and at which the covering element (7) is fastened.

18. Lid according to claim 16 or 17, characterised in that the adjusting element (52) is constructed in the manner of a pot or has a bore and in a given case has a rim (56) provided with transverse webs (54) or the like.

19. Lid according to one of the claims 16 to 18, characterised in that a thermometer (6) for display of the cooking or boiling temperature in the cooking or boiling vessel, which is acted on by the lid (1), is received in a recess (58) or bore of the adjusting element (52).

20. Lid according to one of the claims 16 to 19, characterised in that the adjusting element (52) and the covering element (7) are connected one with the other by means of a detachable connecting element (8), in particular screw, pin or the like.

21. Lid according to claim 20, characterised in that the connecting element (8) consists of thermally conductive material such as iron, aluminium, steel or the like and is connected or coupled with the thermometer (6) in thermally conductive manner.

22. Lid according to one of the preceding claims, characterised in that the covering element (7) is formed substantially as circular plate (60) and preferably comprises an upwardly or downwardly directed bead or the like.

23. Lid according to one of the preceding claims, characterised in that the surface of the covering element (7) is formed to be convexly curved.

24. Lid according to one of the preceding claims, characterised in that at least the outer rim (64) of the covering element (7) is flexible or consists of flexible material.

25. Lid according to one of the preceding claims, characterised in that the covering element (7) has a central, substantially circular protuberance (66), which enters into a receptacle (68) of the adjusting element (52).

26. Lid according to one of the preceding claims, characterised in that a thermostat or the like, which is constructed for an automatic temperature-dependent raising and lowering of the covering element (7) with respect to the passage (12), is arranged in a recess (58) of the adjusting element (52).

27. Lid according to one of the preceding claims, characterised in that one or more concentric annular beads (70) or annular bead portions or the like are arranged or moulded on in a preferably outer rim region at the underside (42) of the lid (1).

28. Lid according to one of the claims 1 to 26, characterised in that one or more annularly encircling steps (72, 74, 76), shoulders or the like are arranged or moulded on in a preferably outer rim region at the underside (42) of the lid (1).

29. Lid according to one of the claims 1 to 3 and 12 to 28, characterised in that the lid (1) is formed by a glass base with a central passage (12) and the handle (2) consists of sheet metal or the like, wherein end portions (18) of the handle (2) are fastened at the lid rim (20) by means of bent-over portions (84).

30. Lid according to one of the claims 1 to 3 and 12 to 28, characterised in that the lid (1) is formed by a glass base with a central passage (12), wherein the glass base is encompassed circumferentially by an outer ring (78) consisting of sheet metal or the like and the handle (2) is integrally connected with the outer ring (78).

31. Lid according to claim 29 or 30, characterised in that the glass base is provided at its rim with an annular shoe (82), which preferably consists of sheet metal, or the like profile, in a given case with a moulded-on web, which profile is connected with the handle (2) or the outer ring (78) by way of a connection (80), for example a screw connection, a rivet connection, an adhesive connection or a soldered connection or the like.

32. Lid according to one of the claims 1 to 3 and 12 to 28, characterised in that the lid (1) comprises four arms (46), which are arranged substantially at right angles one to another, extend radially outwards from a middle part (44) to the lid rim (20) and are fastened at the lid (1) preferably by means of bent-over end portions (84).

33. Lid according to one of the claims 1 to 3, 12 to 16 and 22 to 28, characterised in that the handle (2) consists of two adjacently arranged crossties (86, 88) spanning across the lid (1) radially.

34. Lid according to claim 33, characterised in that the end portions of the adjacent crossties (86, 88) are each retained in a respective mounting (90, 92), which each encompass the lid rim (20) in the manner of a U-profile section and are fixed at the lid (1), in particular in clamping, detenting or the like manner.

35. Lid according to one of the claims 33 and 34, characterised in that a slide (94, 96) is guided to be displaceable on each crosstie (86, 88), wherein a link arrangement for the raising or lowering of the covering element (7) is arranged between the slides (94, 96) and the covering element (7).

36. Lid according to claim 35, characterised in that the link arrangement comprises a respective link arm (98, 100), which is hinged at the slide (94, 96) and at a bearing (102) of the covering element (7).

37. Lid according to one of the claims 35 and 36, characterised in that the slides (94, 96) are fastenable at the crossties (94, 96) in clamping, detenting or the like manner.

## Revendications

1. Couvercle (1) en forme d'assiette, pour plat à cuire, récipient à griller ou analogue, tel que marmite ou poêle à frire, qui comporte au moins une partie ouverte (12) dans une zone centrale (10) située en son milieu, tandis qu'un élément de recouvrement (7) recouvrant en forme de toit la ou les parties ouvertes (12) est fixé au moyen d'une fixation (16), de préférence sur la surface supérieure (14) du couvercle (1), caractérisé en ce que la fixation (16) est réalisée sous forme d'une partie de préhension (2) s'étendant d'un côté à l'autre du couvercle (1) à la façon d'un étrier et les sections d'extrémité (18) de la partie de préhension (2) sont fixées sur le bord de couvercle (20).

2. Couvercle suivant la revendication 1, caractérisé en ce que la partie de préhension (2) est fixée d'une manière séparable au bord de couvercle (20).

3. Couvercle suivant l'une des revendications précédentes, caractérisé en ce que le bord de couvercle (20) est formé par une paroi annulaire (22) pliée vers le haut, la paroi annulaire (22) comportant des becs (24), pattes, saillies ou analogues dirigés radialement vers l'extérieur.

4. Couvercle suivant la revendication 3, caractérisé en ce que les sections d'extrémité (18) de la partie de préhension (2) comportent, sur la face inférieure (26), un logement en forme de gorge ou de rainure pour la paroi annulaire (22).

5. Couvercle suivant l'une des revendications précédentes 3 ou 4, caractérisé en ce que les sections d'extrémité (18) de la partie de préhension (2) comportent, sur la face inférieure (26), une partie repliée (30) essentiellement en U, en forme de crochet ou analogue dirigée vers l'intérieur, partie repliée (30) au moyen de laquelle les becs (24), pattes, saillies ou analogues peuvent être entourés, saisis par-dessous ou saisis par derrière.

6. Couvercle suivant la revendication 5, caractérisé en ce que la partie repliée (30) comporte, sur un premier bord latéral (32) de la partie de préhension (2), une butée (34), notamment une paroi transversale ou analogue.

7. Couvercle suivant l'une des revendications précédentes, caractérisé en ce qu'un élément de verrouillage (3), coulisseau ou analogue, au moyen duquel la partie de préhension (2) est immobilisable sur le bord de couvercle (20) à l'encontre d'une séparation intempestive, est monté d'une manière basculante, pivotante ou analogue sur au moins une section d'extrémité (18) de la partie de préhension (2).

8. Couvercle suivant la revendication 7, caractérisé en ce que l'élément de verrouillage (3) est disposé dans la zone d'un second bord latéral (36) de la partie de préhension (2) et comporte une butée (38), notamment une languette, un bec, une patte ou analogue, qui prend appui, latéralement par rapport au bec (24) du couvercle (2), dans la position de verrouillage.

9. Couvercle suivant l'une des revendications 7 ou 8, caractérisé en ce que l'élément de verrouillage (3) est monté d'une manière pivotante, basculante ou analogue dans la zone d'une section d'extrémité de la partie de préhension (2), notamment par un axe (4) ou analogue qui est notamment disposé transversalement à la direction longitudinale suivant laquelle s'étend la partie de préhension ou un bras (46) de la partie de préhension (2).

10. Couvercle suivant l'une des revendications 7 à 9, caractérisé en ce que, dans la position de fermeture, l'élément de verrouillage (3) est reçu, d'une manière essentiellement complète, par un logement (40) de la section d'extrémité (18) qui est adapté en conséquence.

11. Couvercle suivant l'une des revendications 7 à 10, caractérisé en ce que l'élément de verrouillage (3) peut être enclenché au moyen d'un bec d'enclenchement ou analogue dans la position de fermeture.

12. Couvercle suivant l'une des revendications précédentes, caractérisé en ce que la face supérieure (14) du couvercle (1) est bombée d'une manière essentiellement concave.

13. Couvercle suivant l'une des revendications précédentes, caractérisé en ce que le couvercle (1) est en verre, céramique, matière plastique et/ou métal ou analogue, la face inférieure (42) du couvercle (1) étant éventuellement rendue rugueuse par projection de sable, impression, application de bossages ou d'un décor.

14. Couvercle suivant l'une des revendications précédentes, caractérisé en ce que la partie de préhension (2) comporte une partie centrale (44) qui sert au montage et/ou à la fixation de l'élément de recouvrement (7) et à partir de laquelle deux bras (46), éventuellement également trois ou davantage, s'étendent vers le bord de couvercle (20).

15. Couvercle suivant la revendication 14, caractérisé en ce que les bras (46) de la partie de préhension (2) sont disposés en étant dirigés diamétralement vers l'extérieur ou en formant essentiellement un même angle entre des bras (46) voisins.

16. Couvercle suivant l'une des revendications précédentes, caractérisé en ce que la partie de préhension (2) comprend un dispositif de réglage de position (5) servant, de préférence d'une manière continue, à abaisser l'élément de recouvrement (7) vers le couvercle (1) ou à l'élever à partir de celui-ci.

17. Couvercle suivant la revendication 16, caractérisé en ce que la partie de préhension (2) comporte, dans une partie centrale (44), un trou (48), présentant un filetage intérieur (50), dans lequel il est possible de faire tourner un élément de réglage de position (52) et sur lequel l'élément de recouvrement (7) est fixé.

18. Couvercle suivant la revendication 16 ou 17, caractérisé en ce que l'élément de réglage de position (52) est en forme de cuvette ou comporte un trou et présente éventuellement un bord (56) pourvu de nervures transversales (54) ou analogues.

19. Couvercle suivant l'une des revendications 16 à 18, caractérisé en ce qu'un thermomètre (6) est reçu dans un logement (58) ou trou de l'élément de réglage de position (52) pour indiquer la température de' grillade ou de cuisson dans le récipient à griller ou de cuisson sur lequel le couvercle (1) est appliqué.

20. Couvercle suivant l'une des revendications 16 à 19, caractérisé en ce que l'élément de réglage de position (52) et l'élément de recouvrement (7) sont reliés l'un à l'autre au moyen d'un élément de liaison (8) inséparable, notamment vis, boulon ou analogue.

21. Couvercle suivant la revendication 20, caractérisé en ce que l'élément de liaison (8) est en une matière thermoconductrice, telle que fer, aluminium, acier ou analogue, et est relié ou accouplé au thermomètre (6) d'une manière permettant de conduire la chaleur.

22. Couvercle suivant l'une des revendications précédentes, caractérisé en ce que l'élément de recouvrement (7) est réalisé essentiellement sous forme d'une plaque circulaire (60) et comporte de préférence, vers son bord, un bourrelet ou analogue dirigé vers le haut ou vers le bas.

23. Couvercle suivant l'une des revendications précédentes, caractérisé en ce que la surface de l'élément de recouvrement (7) est bombée d'une manière convexe.

24. Couvercle suivant l'une des revendications précédentes, caractérisé en ce qu'au moins le bord extérieur (64) de l'élément de recouvrement (7) présente un agencement flexible ou est réalisé en une matière flexible.

25. Couvercle suivant l'une des revendications précédentes, caractérisé en ce que l'élément de recouvrement (7) comporte une partie renflée (66) centrale essentiellement circulaire qui s'enfonce dans un logement (68) de l'élément de réglage de position (52).

26. Couvercle suivant l'une des revendications précédentes, caractérisé en ce qu'un thermostat ou analogue, qui est agencé pour un soulèvement et un abaissement automatique de l'élément de recouvrement (7) par rapport à la partie ouverte (1) en fonction de la température, est disposé dans un logement (58) de l'élément de réglage de position (52).

27. Couvercle suivant l'une des revendications précédentes, caractérisé en ce qu'un ou plusieurs bourrelets annulaires (70) ou segments de bourrelets annulaires ou analogues, concentriques, sont disposés ou réalisés au formage dans une zone de bord, de préférence extérieure, sur la face inférieure (42) du couvercle (1).

28. Couvercle suivant l'une des revendications 1 à 26, caractérisé en ce que, dans une zone de bord, de préférence extérieure, un ou plusieurs épaulements (72, 74, 76), décrochements ou analogues faisant le tour en forme d'anneau sont disposés ou réalisés au formage sur la face inférieure (42) du couvercle (1).

29. Couvercle suivant l'une des revendications 1 à 3, 12 à 28, caractérisé en ce que le couvercle (1) est formé d'un fond en verre comportant une partie ouverte (12) centrale et la partie de préhension (2) est en tôle ou analogue, des sections d'extrémité (18) de la partie de préhension (2) étant fixées sur le bord de couvercle (20) au moyen de parties repliées (84).

30. Couvercle suivant l'une des revendications 1 à 3, 12 à 28, caractérisé en ce que le couvercle (1) est formé d'un fond en verre comportant une partie ouverte (12) centrale, le fond en verre étant entouré, à sa périphérie, par un anneau extérieur (78) en tôle ou analogue et la partie de préhension (2) étant reliée d'une seule pièce à l'anneau extérieur (78).

31. Couvercle suivant la revendication 29 ou 30, caractérisé en ce que, vers le bord, le fond en verre comprend un patin annulaire (82) ou pièce profilée analogue, de préférence en tôle, comportant éventuellement une nervure réalisée au formage, laquelle pièce profilée est reliée à la partie de préhension (2) ou à l'anneau extérieur (78) par une liaison (80), par exemple une liaison par vissage, rivetage, collage ou soudage ou analogue.

32. Couvercle suivant l'une des revendications 1 à 3, 12 à 28, caractérisé en ce que la partie de préhension (2) comporte quatre bras (46), essentiellement disposés perpendiculairement entre eux, qui s'étendant radialment vers l'extérieur, d'une partie centrale (44) à un bord de couvercle (20), et sont fixés au couvercle (1), de préférence au moyen de parties repliées d'extrémité (84).

33. Couvercle suivant l'une des revendications 1 à 3, 12 à 16, 22 à 28, caractérisé en ce que la partie de préhension (2) est constituée de deux étriers (86, 88) voisins s'étendant radialement d'un côté à l'autre du couvercle (1).

34. Couvercle suivant la revendication 33, caractérisé en ce que les sections d'extrémité des étriers (86, 88) voisins sont maintenues respectivement dans des fixations (90, 92) qui entourent le bord de couvercle (20) à la façon d'une pièce profilée en U et sont fixées sur le couvercle (1), notamment en le serrant, en s'enclenchant sur lui ou d'une manière analogue.

35. Couvercle suivant l'une des revendications 33 ou 34, caractérisé en ce que, sur chaque étrier (86, 88), un coulisseau (94, 96) respectif est guidé d'une manière coulissante, un agencement articulé qui sert à soulever et abaisser l'élément de recouvrement (7) étant disposé entre les coulisseaux (94, 96) et l'élément de recouvrement (7).

36. Couvercle suivant la revendication 35, caractérisé en ce que l'agencement articulé comporte un bras articulé (98, 100) respectif qui est articulé sur le coulisseau (94, 96) et sur un support (102) de l'élément de recouvrement (7).

37. Couvercle suivant l'une des revendications 35 à 36, caractérisé en ce que les coulisseaux (94,96) peuvent être immobilisés sur les étriers (86, 88) en les serrant, en s'enclenchant sur eux ou d'une manière analogue.
